# EUROPÄISCHE PATENTSCHRIFT

(11) **EP 2 454 135 B1**
(45) Veröffentlichungstag und Bekanntmachung des Hinweises auf die Patenterteilung: **12.07.2017**
(21) Anmeldenummer: 10732639.9
(22) Anmeldetag: 11.05.2010
(51) Int. Cl.: B60T 13/68, H01Q 1/32, B60G 17/0195, B60C 23/00

(54) **STEUERGERÄT FÜR EINE BREMSANLAGE EINES FAHRZEUGS**
CONTROL DEVICE FOR THE BRAKE SYSTEM OF A VEHICLE
APPAREIL DE COMMANDE POUR LE SYSTÈME DE FREINAGE D'UN VÉHICULE

(30) Priorität: 16.07.2009 DE 102009033366
(43) Veröffentlichungstag der Anmeldung: 23.05.2012
(73) Patentinhaber: WABCO GmbH, 30453 Hannover (DE)
(72) Erfinder: AMTSFELD, Joachim, 30966 Hemmingen (DE); CORNELIUS, Christian, 31832 Springe (DE); LUCAS, Johann, 31319 Sehnde (DE); OHLENDORF, Jens, 30453 Hannover (DE); ROSENDAHL, Hartmut, 30167 Hannover (DE); STRACHE, Wolfgang, 30966 Hemmingen (DE); WOLTERS, Jörg, 30855 Langenhagen (DE)
(74) Vertreter: Lauerwald, Jörg
(86) Internationale Anmeldenummer: PCT/EP2010/002915
(87) Internationale Veröffentlichungsnummer: WO 2011/006555

(56) Entgegenhaltungen:
- EP-A1- 1 731 395
- EP-A1- 2 077 215
- EP-A2- 1 406 805
- WO-A1-03/042018
- WO-A1-2006/045489
- WO-A2-03/018337

## Beschreibung

Die Erfindung betrifft ein Steuergerät für eine Bremsanlage eines Fahrzeugs. Das Steuergerät ist bei bekannten Bremsanlagen in einem Zentralmodul in der Nähe der Bremspedaleinrichtung im Innenraum des Fahrzeugs in einer Kabine angeordnet, in der wenigstens auch ein Fahrersitz vorgesehen ist.

Von der Kabine führen herkömmlicherweise zahlreiche elektrische Leitungen vom Zentralmodul zu diversen Komponenten der Bremsanlage, insbesondere zu einem Hinterachsmodul und ggf. zu einem Vorderachsmodul, wobei die Module Ventileinrichtungen zur Modulation von pneumatischen Drücken zur pneumatischen Betätigung von Bremszylindern aufweisen. Diese Module sind an einem Tragwerk eines Fahrzeugs befestigt. Dieses Tragwerk wird bei Lastkraftwagen. üblicherweise von einem Leiterrahmen gebildet. Omnibusse weisen demgegenüber oftmals eine selbsttragende Karosserie als Tragwerk auf. Aufgrund der Vielzahl elektrischer Leitungen vom und zum Zentralmodul führen dicke Kabelstränge von der Kabine zum Tragwerk. Die Verlegung derartiger Kabelstränge ist komplex und aufwändig, insbesondere da zwischen Kabine und Tragwerk regelmäßig Relativbewegungen stattfinden, sei es aufgrund von Federungsbewegungen der Kabine gegenüber dem Tragwerk oder aufgrund einer Kippbarkeit der Kabine gegenüber dem Tragwerk. Letzteres ist üblicherweise bei Nutzfahrzeugen, insbesondere Lastkraftwagen vorgesehen, um an den unter der Fahrerkabine angeordneten Motorraum zu gelangen. Dicke Kabelstränge flexibel zu verlegen, ohne ihre Zuverlässigkeit zu beeinträchtigen, ist jedoch technisch anspruchsvoll und daher teuer.

Der Erfindung liegt daher das Problem zugrunde, derartige bekannte Bremsanlagen zu verbessern. Insbesondere sollen die Verlegung von Leitungen vereinfacht, die Verlegung und Zuverlässigkeit von Kabelsträngen verbessert, die Kosten bei der Entwicklung, eine Fehleranfälligkeit während des Betriebes und damit auch Kosten während des Betriebes gesenkt werden.

Die Erfindung löst dieses Problem mit einem Steuergerät mit ABS-Leitungen nach Anspruch 1, mit einer Bremsanlage nach Anspruch 10, bzw. mit einem Fahrzeug nach Anspruch 11. Das Steuergerät ist so ausgebildet, dass es außerhalb der Kabine an dem Tragwerk des Fahrzeugs angeordnet werden kann. Hierdurch verringert sich signifikant die Anzahl elektrischer Leitungen, welche von der Kabine zu den Einrichtungen am Tragwerk führen. Hierdurch können Kabelstränge zwischen Kabine und Tragwerk wesentlich dünner und damit flexibler ausfallen, was die Beweglichkeit der Kabelstränge verbessert.

Ferner vereinfacht die Verringerung der Anzahl der von der Kabine zum Tragwerk (und umgekehrt) führenden elektrischen Leitungen die Abdichtung der Kabine im Bereich einer entsprechenden Kabeldurchführung der Kabelstränge in die bzw. aus der Kabine. Abdichtungsprobleme durch dicke Kabelstränge können somit beseitigt bzw. signifikant verbessert werden.

Auch in der Kabine selbst reduziert sich die Anzahl elektrischer Leitungen. Dies reduziert Materialkosten, Wartungskosten und Reparaturkosten. Ferner verringern kürzere Leitungswege die Störanfälligkeit der Bremsanlage, erhöhen die Ausfallsicherheit und erhöhen hierdurch auch die Sicherheit der Bremsanlage. Insbesondere bei Lastkraftwagen mit einem kippbaren Frontlenker-Fahrerhaus als Kabine führt die Anordnung der Steuereinrichtung am Tragwerk dazu, dass sich die Anzahl elektrischer Leitungen oder Datenleitungen, welche durch eine Kippbewegung der Kabine relativ zu dem Tragwerk gebogen werden müssen, gegenüber dem Stand der Technik reduziert. Darüber hinaus wird Platz in der Kabine gespart, insbesondere im Bereich der Frontablage, des Armaturenbretts bzw. Handschuhfachs oder der Bremspedaleinrichtung, wo die Steuereinrichtung nach dem Stand der Technik üblicherweise angeordnet ist.

Die Erfindung hat erkannt, dass die Anordnung des Steuergerätes am Tragwerk trotz des höheren Aufwands, welcher zum Schutz des Steuergerätes gegen Feuchtigkeit und Schmutzpartikeln notwendig ist (z. B. erhöhte Anforderungen an das Gehäuse, Kabelabdichtungen), wegen der Vielzahl elektrischer Leitungen, welche nun nicht mehr in die Kabine geführt werden müssen, vorteilhaft ist und die bekannten Bremsanlagen verbessert.

Des Weiteren weist das Steuergerät eine zusätzliche Funktionalität zur Steuerung eines elektronischen Luftfedersystems auf. Hierunter ist zu verstehen, dass von dem Steuergerät die Bauelemente einer elektronischen Luftfederanlage, wie z. B. ein Magnetventil zum Befüllen oder Entleeren eines Luftfederbalges, steuerbar sind. D. h. die Steuerungselektronik des Luftfedersystems ist in das Steuergerät der Bremsanlage integriert. Sie weisen ein gemeinsames Gehäuse auf. Durch die Integration werden Kosten gesenkt, da ein Gehäuse eingespart und der Verkabelungsaufwand reduziert wird. Insbesondere werden Kabel zur Stromversorgung und für die Verbindung mit dem CAN-Bus gespart. Des Weiteren wird durch die Erfindung Bauraum eingespart, da ein gemeinsames Steuergerät für Bremsanlage und Luftfederanlage weniger Bauraum als zwei getrennte Steuergeräte beansprucht. Hierdurch, wie auch durch den verringerten Verkabelungsaufwand, wird des Weiteren der Aufwand bei der Montage des Fahrzeugs reduziert.

Vorteilhafte Weiterbildungen der Erfindung werden nachfolgend beschrieben.

Das Steuergerät befindet sich in einem Gehäuse, welches einen Schutz vor Wasser und Schmutzpartikeln bildet. Bei einer speziellen Ausführungsform ist das Gehäuse zweiteilig mit einem Innengehäuse und einem Außengehäuse ausgebildet. Im Bereich von Deckeln oder Öffnungen sind die Gehäuse mit Dichtungen abgedichtet. Kabelverbindungen führen durch Öffnungen im Innengehäuse zu Steckerbuchsen, welche in das Außengehäuse eingelassen oder an diesem Außengehäuse angeordnet sind. Verbindungen von und zu dem Steuergerät sind durch das Einstecken von Steckern in diese Steckerbuchsen herstellbar.

Bevorzugt weist das Steuergerät wenigstens eine zur Funktionalität des Steuergerätes, insbesondere der Betriebsbremsfunktionalität, zusätzliche Funktionalität zur Steuerung, insbesondere eines Feststellbremsmodulators zur Bereitstellung einer Feststellbremsfunktion, eines Antiblockiersystems zur Bereitstellung einer Antiblockierfunktion, eines Fahrdynamikregelungsmoduls zur Regelung der Fahrdynamik bzw. der dynamischen Fahrstabilität und/oder einer elektronisch gesteuerten Luftaufbereitung, auf. Besonders bevorzugt ist das Steuergerät hierbei in ein Hinterachsmodul bzw. einen Hinterachsmodulator integriert, welcher ggf. zugleich ein Feststellbremsmodulator zur Modulation eines pneumatischen Drucks für eine Feststellbremsfunktion von Bremsen des Fahrzeugs ist. Darüber hinaus ist auch eine Integration des Steuergerätes in einen Vorderachsmodulator, das Fahrdynamikregelungsmodul bzw. ESC (Electronic Stability Control)-Modul oder ein elektronisches Luftaufbereitungsmodul bzw. EAPU (Electronic Air Processing Unit)-Modul möglich. Durch die Integration in bestehende Module werden Kosten gesenkt, insbesondere da sich hierdurch die Anzahl der elektronischen Steuereinrichtungen, der elektrischen Leitungen und die Anzahl abgedichteter und vor Schmutz und Nässe schützender Gehäuse reduziert.

Gemäß einer vorteilhaften Weiterbildung ist in dem Steuergerät noch wenigstens ein Sensor zur Sensierung eines Fahrzustandes integriert. Unter einem Fahrzustand sind hierbei insbesondere positive und negative Beschleunigungen, ganz besonders auch Querbeschleunigungen, des Fahrzeugs zu verstehen. Der Sensor kann bspw. ein Beschleunigungssensor, Gierratensensor und/oder Neigungssensor sein und dient zur Erfassung eines Fahrzustandes, welcher einen automatischen Bremseingriff, etwa durch eine Fahrdynamikregelung erfordert. Die Integration in das Steuergerät spart Kosten.

Gemäß einer vorteilhaften Weiterbildung weist das Steuergerät zusätzliche Funktionalitäten für Fahrerassistenzsysteme auf, wobei das Fahrerassistenzsystem die Funktionen Spurhalteassistent (LDW), adaptive Geschwindigkeitsregelung (ACC), Totwinkelüberwachung (BSD) und/oder autonomes Notbremssystem (AEBS) aufweisen kann.

Gemäß einer weiteren vorteilhaften Weiterbildung weist das Steuergerät eine zusätzliche Funktionalität zur Steuerung eines Reifendruckkontrollsystems auf.

Vorteilhafterweise und erfindungsgemäß werden ABS-Leitungen, welche von dem Steuergerät zu Raddrehzahlsensoren führen, als Antennen zum Empfang von Signalen von Reifendruckkontrollmodulen, welche den Reifendruck detektieren und an oder in Rädern oder Reifenventilen des Fahrzeugs montiert sind, genutzt. Hierdurch werden separate Antennen eingespart, da die ABS-Leitungen als Antennen verwendet werden.

Es ist auch denkbar, dass die ABS-Leitungen als elektrische Zuleitungen zu in Radhäusern des Fahrzeugs angebrachten Antennen zum Empfang von Signalen der Reifendruckkontrollmodule genutzt werden. Bei dieser Ausführung werden die Zuleitungen zu den Antennen eingespart.

Eine weitere vorteilhafte Ausgestaltung der Erfindung sieht vor, dass anhand der über die ABS-Leitungen übertragenen Signale der Reifendruckkontrollmodule eine Zuordnung der Reifendruckkontrollmodule zu Radhäusern oder Rädern des Fahrzeugs erfolgt. Diese Ausgestaltung nutzt den Effekt, dass das stärkste Signal auf der ABS-Leitung zu erwarten ist, die zu dem zugehörigen Radhaus führt. Die Zuordnung erfolgt also anhand der Stärke des Signals.

Weitere vorteilhafte Ausführungsformen ergeben sich aus den Unteransprüchen sowie aus den anhand der Zeichnung näher erläuterten Ausführungsbeispielen. In der Zeichnung zeigt:
- Fig. 1: eine schematische Darstellung der Bremsanlage gemäß einem ersten Ausführungsbeispiel;
- Fig. 2: eine schematische Darstellung der Bremsanlage gemäß einem zweiten Ausführungsbeispiel;
- Fig. 3: eine schematische Darstellung der Bremsanlage gemäß einem dritten Ausführungsbeispiel;
- Fig. 4: eine schematische Darstellung der Bremsanlage gemäß einem vierten Ausführungsbeispiel;
- Fig. 5: eine schematische Darstellung der Bremsanlage gemäß einem fünften Ausführungsbeispiel;
- Fig. 6: eine schematische Darstellung der Bremsanlage gemäß einem sechsten Ausführungsbeispiel;
- Fig. 7: eine schematische Darstellung der Bremsanlage gemäß einem siebten Ausführungsbeispiel;
- Fig. 8: eine schematische Darstellung der Bremsanlage gemäß einem achten Ausführungsbeispiel;
- Fig. 9: eine schematische Darstellung der Bremsanlage gemäß einem neunten Ausführungsbeispiel;
- Fig. 10: eine schematische Darstellung der Bremsanlage gemäß einem zehnten Ausführungsbeispiel;
- Fig. 11: eine schematische Darstellung der Bremsanlage gemäß einem elften Ausführungsbeispiel der Erfindung;
- Fig. 12: eine Anordnung der Bremsanlage an einem Fahrzeug, welches als Lastkraftwagen ausgebildet ist, in vereinfachter Darstellung und
- Fig. 13: eine Anordnung der Bremsanlage an einem Fahrzeug, welches als Omnibus ausgebildet ist, in vereinfachter Darstellung.

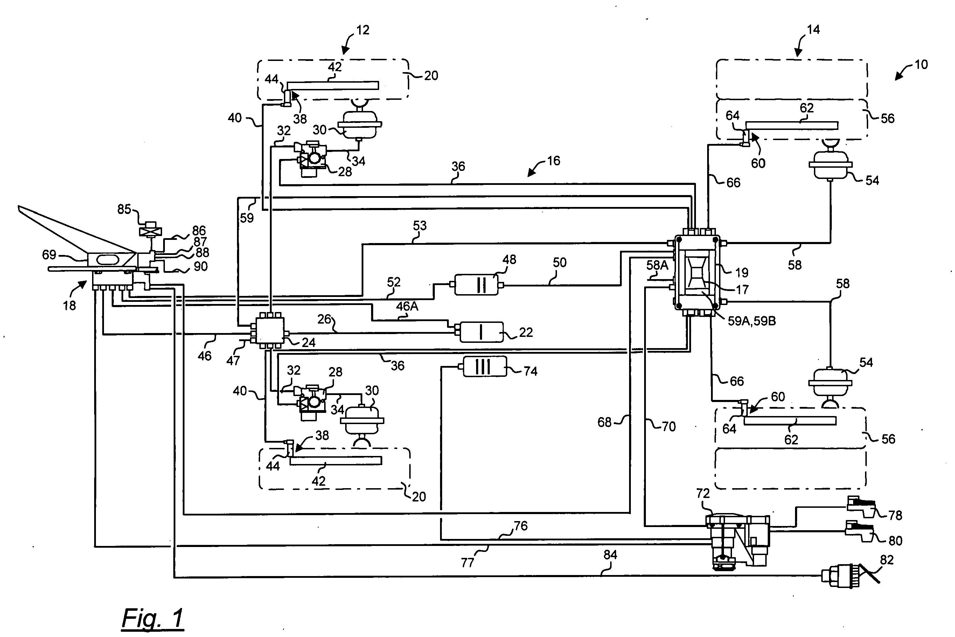

Fig. 1 zeigt schematisch ein zweiachsiges Fahrzeug 10 mit einer Vorderachse 12 und einer Hinterachse 14 sowie einer Bremsanlage 16. Die Bremsanlage 16 weist ein Steuergerät auf, mittels der eine Bremskraft elektronisch berechenbar und ein Bremskraftsignal in Abhängigkeit von der berechneten Bremskraft erzeugbar ist. Darüber hinaus weist die Bremsanlage 16 drei Bremskreise einer mittels einer Bremspedaleinrichtung 18 betätigbaren Betriebsbremse auf. Die Erfindung ist jedoch nicht auf zweiachsige Fahrzeuge beschränkt und kann insbesondere auch bei Fahrzeugen mit mehr als zwei Achsen, insbesondere mehreren Hinterachsen und/oder mehreren Vorderachsen eingesetzt werden. Unter einem Fahrzeug ist dabei u. a. auch ein Zugfahrzeug oder auch ein Fahrzeug ohne Zugfunktion, z.B. ein Bus, zu verstehen.

Ein Fahrzeug weist ein Tragwerk und eine Kabine mit einem Fahrersitz auf. Neben dem Fahrersitz kann die Kabine noch weitere Sitze, bspw. einen Beifahrersitz oder bei einem Bus eine Vielzahl von Sitzen für Fahrgäste, aufweisen. Das Tragwerk kann bei einem Lastkraftwagen aus einem Leiterrahmen gebildet sein. Busse weisen als Tragwerk vorzugsweise eine selbsttragende Karosserie auf, können jedoch ebenfalls einen Rahmen zur Aufnahme der Kabine aufweisen.

Die Bremspedaleinrichtung 18 ist in der Kabine in der Nähe des Fahrersitzes angeordnet, so dass sie von einem Fahrer mit dem Fuß bedient werden kann. Das Steuergerät ist erfindungsgemäß außerhalb der Kabine an dem Tragwerk, insbesondere dem Leiterrahmen, angeordnet. Das Steuergerät befindet sich somit nicht in dem für den Fahrer und ggf. Fahrgäste vorgesehenen Innenraum des Fahrzeugs 10. Das Steuergerät kann an dem Tragwerk befestigt, bspw. angeschraubt, oder in irgendeiner anderen Weise außerhalb der Kabine unmittelbar oder mittelbar an dem Tragwerk angeordnet sein. Des Weiteren weist das Steuergerät eine zusätzlich Funktionalität zur Steuerung eines elektronischen Luftfedersystems auf.

Des Weiteren zeigt Fig. 1 eine Steuereinrichtung 17, welche ein erstes Modul 19 aufweist, wobei das erste Modul 19 ein Hinterachsmodul ist.

Das erfindungsgemäße Steuergerät ist in der Steuereinrichtung 17, bzw. in dem Modul 19 integriert.

Das Ausführungsbeispiel gemäß Fig. 1 zeigt eine druckluftbetriebene Bremsanlage 16 mit drei Betriebsbremskreisen. Ein erster Betriebsbremskreis dient zum Bremsen von Rädern 20 einer Vorderachse 12. Dieser erste Betriebsbremskreis weist einen Druckluftvorratsbehälter 22 auf, der mit einem zweiten Modul 24 über eine Druckluftleitung 26 verbunden ist. Dieses zweite Modul 24 ist in diesem Ausführungsbeispiel ein Vorderachsmodul. Ferner umfasst der erste Betriebsbremskreis für jedes der Räder 20 jeweils eine Ventileinheit 28, über die Druckluft zu Bremszylindern 30 von Bremsen an den Rädern 20 zu- bzw. abgeführt werden kann. Die Ventileinheiten 28 stehen daher über Druckluftleitungen 32 mit dem Vorderachsmodul 24 und über Druckluftleitungen 34 mit den Bremszylindern 30 in Verbindung. Das Vorderachsmodul 24 weist ein oder mehrere Magnetventile auf, mittels derer die Druckluftleitungen 32 belüftet und entlüftet werden können und mittels derer ggf. ein pneumatischer Druck in den Druckluftleitungen 32 gehalten werden kann.

Die Ventileinheiten 28 sind ferner über elektrische Leitungen 36 mit dem Hinterachsmodul 19 verbunden, um von diesem Steuersignale zum Betätigen der Ventileinhalten 28 zu erhalten. Vorteilhafterweise können die beiden Ventileinheiten 28 auch in das Vorderachsmodul 24 integriert werden.

An den Rädern 20 sind ferner Radgeschwindigkeitssensiermittel 38 vorgesehen, welche über elektrische Leitungen 40 mit dem Hinterachsmodul 19 verbunden sind. Die Radgeschwindigkeitssensiermittel 38 dienen zur Ermittlung der jeweiligen Raddrehgeschwindigkeit. Sie bestehen jeweils aus einem mit dem jeweiligen Rad 20 drehfest verbundenen Polrad 42, welches mit einem aktiv oder passiv arbeitenden Rad-Sensor 44 elektromagnetisch gekoppelt ist. Mittels der Radgeschwindigkeitssensiermittel 38 kann bspw. ein Blockieren oder ein Schlupf der Räder 20 festgestellt und über entsprechende Steuersignale vom Hinterachsmodul 19 an die Ventileinheiten 28 der Bremsdruck zu den Bremszylindern 30 nachgeregelt, insbesondere bei einer Blockierneigung eines Rades 20 reduziert werden. Auf diese Weise wird eine Antiblockierfunktion für die Räder 20 bereitgestellt.

Das Vorderachsmodul 24 ist ferner über eine Druckluftleitung 46 mit der Bremspedaleinrichtung 18 verbunden. Diese Druckluftleitung 46 führt einen pneumatisch ausgesteuerten Druck als Redundanzdruck von der Bremspedaleinrichtung 18 an das Vorderachsmodul 24. Druckluft wird der Bremspedaleinrichtung 18 hierfür über eine Druckluftleitung 46A aus dem Druckluftvorratsbehälter 22 bereitgestellt. Schließlich kann das Vorderachsmodul 24 einen Anschluss 47 für eine elektrische Energieversorgung aufweisen.

Ein zweiter Bremskreis weist einen zweiten Druckluftvorratsbehälter 48 auf, der über eine Druckluftleitung 50 mit dem Hinterachsmodul 19 und über eine Druckluftleitung 52 mit der Bremspedaleinrichtung 18 pneumatisch verbunden ist. Ein mittels der Bremspedaleinrichtung 18 ausgesteuerter Druck gelangt über eine Druckluftleitung 53 als Redundanzdruck bei einem Ausfall der Elektronik an das erste Modul 19. Dieser zweite Bremskreis umfasst ferner Bremszylinder 54, wobei jeder der Bremszylinder jeweils einem Rad 56 der Hinterachse 14 zugeordnet ist. Die Bremszylinder 54 sind über Druckluftleitungen 58 mit dem Hinterachsmodul 19 verbunden. Innerhalb des Hinterachsmoduls 19 sind ein bzw. mehrere Ventile zur Bremsdruckzumessung für die Bremszylinder 54 vorgesehen. Das Ventil bzw. die Ventile sind ein oder mehrere Magnetventile, mittels derer die Druckluftleitungen 58 belüftet und entlüftet werden können und mittels derer ggf. ein pneumatischer Druck in den Druckluftleitungen 58 gehalten werden kann.

Das Hinterachsmodul 19 weist einen Anschluss 58A für eine elektrische Energieversorgung auf. Das Hinterachsmodul 19 ist ferner über eine elektrische Leitung 59 mit dem Vorderachsmodul 24 verbunden. Über diese elektrische Leitung 59 sendet das Hinterachsmodul 19 Steuersignale an das Vorderachsmodul 24 zur Steuerung von ein oder mehreren Ventilen zur Bremsdruckzumessung für die Bremszylinder 30. Das Hinterachsmodul 19 weist somit neben der Steuereinrichtung 17 auch eine Steuerungselektronik bzw. Steuerungslogik 59A für die Bemessung des Bremsdrucks für die Bremsen an der Vorderachse 12 sowie eine Steuerungslogik 59B für die Bemessung des Bremsdrucks an der Hinterachse 14 auf. Die Steuerungslogiken 59A und 59B werden über Bremskraftsteuersignale von der Steuereinrichtung angesteuert und weisen Leistungselektronikkomponenten zur Bereitstellung von elektrischer Leistung für die Betätigung von Bremskomponenten, wie Elektromagnetventile oder elektromechanische Aktuatoren, auf.

An den Rädern 56 der Hinterachse 14 sind ebenfalls Radgeschwindigkeitssensiermittel 60 vorgesehen, welche eine Ermittelung der jeweiligen Raddrehgeschwindigkeit erlauben. Wiederum bestehen die Radgeschwindigkeitssensiermittel 60 jeweils aus einem mit dem Rad 56 drehfest verbundenen Polrad 62, das mit einem aktiv oder passiv (induktiv) arbeitenden Radsensor 64 elektromagnetisch gekoppelt ist. Die Radgeschwindigkeitssensiermittel 60, insbesondere die Radsensoren 64, sind über elektrische Leitungen 66 mit dem Hinterachsmodul 19 verbunden. Mittels der Radgeschwindigkeitssensiermittel 60 kann ein Blockieren bzw. ein Schlupf der Räder 56 der Hinterachse 14 festgestellt und entsprechend die Bremsdruckzumessung zu den Bremszylindern 64 variiert werden, um einer Blockierneigung der Räder 56 bzw. einem erhöhten Schlupf dieser Räder 56 entgegenzuwirken.

Das Hinterachsmodul 19 ist ferner über eine elektrische Leitung 68 mit der Bremspedaleinrichtung 18 verbunden und empfängt über diese elektrische Leitung 68 ein elektrisches Bremsanforderungssignal von einem Bremswertgeber 69 der Bremspedaleinrichtung 18. Unter Berücksichtigung des elektrischen Bremsanforderungssignals bemisst das Hinterachsmodul 19 - ebenso wie das Vorderachsmodul 24 - den den Bremszylindern 54 bzw. 30 zuzuführenden Bremsdruck.

Das Hinterachsmodul 19 ist ferner mit einer elektrischen Leitung 70 mit einem Anhängersteuerventil 72 eines dritten Bremskreises verbunden. Dieser dritte Bremskreis weist einen dritten Druckluftvorratsbehälter 74 auf, der über eine Druckluftleitung 76 mit dem Anhängersteuerventil 72 verbunden ist. Das Anhängersteuerventil 72 dient zur Bremsdrucksteuerung eines ankoppelbaren Anhängefahrzeugs (nicht dargestellt). Das Anhängersteuerventil 72 gibt die von dem Druckluftvorratsbehälter 74 bezogene Druckluft nach Maßgabe elektrischer Steuersignale oder eines pneumatischen Drucks, insbesondere der über die elektrische Leitung 70 vom Hinterachsmodul 19 erhaltenen elektrischen Steuersignale oder des über eine Druckluftleitung 77 von der Bremspedaleinrichtung 18 zugeleiteten pneumatischen Drucks, über Druckluftanschlüsse 78, 80 an eine Bremsanlage eines ankoppelbaren Anhängerfahrzeuges ab. Indirekt erhält somit das Anhängersteuerventil 72 über das Hinterachsmodul 19 ein elektrisches Signal, z.B. ein pulsbreitenmoduliertes Signal, das den Bremswunsch des Fahrers repräsentiert, und einen direkt mittels der Bremspedaleinrichtung 18 ausgesteuerten redundanten pneumatischen Druck bzw. pneumatischen Redundanzdruck.

Ferner ist ein elektrischer Steckanschluss 82 zur Stromversorgung und Übermittelung von Daten zum und vom Anhängerfahrzeug vorgesehen. Der elektrische Steckanschluss 82 ist über eine elektrische Leitung 84 mit der Bremspedaleinrichtung 18 verbunden, kann alternativ auch an ein Modul 19 am Rahmen angeschlossen werden.

Die Bremspedaleinrichtung 18 ist ferner mit einem Rollbremssignalgeber 85 verbunden, über den eine Rollbremsfunktion aktiviert bzw. deaktiviert werden kann. Diese Rollbremsfunktion ist bspw. derart ausgestaltet, dass nach Aktivierung der Rollbremsfunktion bei fahrendem Fahrzeug eine Überwachung darauf stattfindet, ob das Fahrzeug zum Stillstand kommt. Bei Erkennen des Fahrzeugstillstandes infolge einer Bremsbetätigung durch den Fahrer werden dann automatisch durch Betätigung der Ventileinheiten 28 sowie der in dem Hinterachsmodul 19 vorgesehenen Ventile die jeweils vorliegenden oder vorbestimmten Bremsdrücke in den Bremszylindern 30, 54 sowie in der Anhängerbremsanlage auf dem aktuell vorliegenden bzw. einem vorbestimmten Niveau gehalten, ohne dass der Fahrer weiterhin das Bremspedal betätigen muss. Hierdurch kann das Fahrzeug auch nach dem Lösen des Bremspedals an einer geneigten Fahrbahn im Stillstand gehalten werden. Sobald erkannt wird, dass der Fahrer versucht, mit dem Fahrzeug anzufahren, werden die Radbremsen sowie die Anhängerbremsanlage automatisch gelöst.

Die Radgeschwindigkeitssensiermittel 38, 60 können darüber hinaus dazu verwendet werden, um zu erkennen, ob das Fahrzeug bei aktivierter Rollbremse und zunächst erreichtem Fahrzeugstillstand zu rollen beginnt. Falls dies der Fall sein sollte, wird die Bremskraft erhöht, indem die Bremszylinder 30, 54 und/oder ggf. vorhandene elektromechanische Stellorgane größere Zuspannkräfte für die Radbremsen zur Verfügung stellen.

Die Bremspedaleinrichtung 18, das Vorderachsmodul 24 sowie das Hinterachsmodul 19 sind direkt oder indirekt mit einer oder mehreren elektrischen Energieversorgung(en) (nicht dargestellt) verbunden. Vorteilhafterweise ist die Bremspedaleinrichtung 18 über einen Anschluss 86 mit einer ersten elektrischen Energieversorgung eines ersten, auch das Vorderachsmodul 24 sowie das Hinterachsmodul 19 über dessen Anschluss 58A versorgenden Stromkreises verbunden. Die Bremspedaleinrichtung 18 ist vorteilhafterweise ferner über einen Anschluss 87 mit einer zweiten elektrischen Energieversorgung eines zweiten, ggf. auch eine Feststellbremssteuereinheit versorgenden Stromkreis verbunden. Die Bremspedaleinrichtung 18 ist somit vorteilhafterweise mit beiden Stromkreisen verbunden. Die Bremspedaleinrichtung 18 weist somit vorteilhafterweise eine mindestens zweifache Energieversorgung auf, um auch im einfachen Fehlerfall noch die Funktion der Bremspedaleinrichtung 18 sicherzustellen.

Die o. g. elektrische Leitung 68, welche das Hinterachsmodul 19 mit der Bremspedaleinrichtung 18 verbindet, ist als primäre Kommunikationsleitung vorgesehen. Die Bremspedaleinrichtung 18 weist ferner einen Anschluss 88 für einen Datenbus, insbesondere für einen CAN-Bus auf. Dieser Datenbus verbindet die Bremspedaleinrichtung 18 über einen (nicht dargestellten) Eingang mit dem Hinterachsmodul 19. Der Datenbus dient vorteilhafterweise als sekundäre bzw. redundante Kommunikationsleitung zwischen Bremspedaleinrichtung 18 und Hinterachsmodul 19. Vorteilhafterweise sind daher statt nur eines Anschlusses 88 aus Redundanzgründen mindestens zwei Datenverbindungen zu Einrichtungen der Bremsanlage, insbesondere zur Steuereinrichtung 17, vorgesehen.

Ebenfalls aus Redundanzgründen weist die Bremspedaleinrichtung 18 vorteilhafterweise mindestens zwei Sensoren zur Erfassung des als elektrisches Bremsanforderungssignal ausgegebenen Sollwertes der Bremsanforderung, z.B. der Verzögerungsanforderung, auf.

Ferner weist die Bremspedaleinrichtung 18 einen Diagnoseanschluss 90 auf, der eine Schnittstelle bildet, insbesondere für den Anschluss eines Wartungsrechners zur Wartung und Fehleranalyse.

Vorteilhafterweise kann die Bremspedaleinrichtung 18 eines, mehrere oder alle der genannten und folgenden Merkmale aufweisen: Die Bremspedaleinrichtung 18 weist eine Steuerungseinrichtung sowie einen oder mehrere Anschlüsse zur Ansteuerung von Bremslichtern des Fahrzeuges auf. Ferner weist die Bremspedaleinrichtung 18 Mittel, insbesondere Sensoren, bzw. Anschlüsse für derartige Mittel zum Auslesen von ggf. nur optional vorhandenen Bedienelementen der Bremsanlage in der Kabine des Fahrzeuges, insbesondere in seinem Fahrerhaus oder Cockpit, auf. Ferner weist die Bremspedaleinrichtung 18 Anschlüsse zur Ansteuerung optischer und/oder akustischer Signale der Bremsanlage in der Kabine, insbesondere im Fahrerhaus oder Cockpit, oder außerhalb des Fahrzeuges auf.

Ferner weist die Bremspedaleinrichtung 18 vorteilhafterweise wenigstens einen Anschluss für eine elektrische Verbindung zur Steuerung der Antriebseinheit des Fahrzeuges zur Einleitung einer unterstützenden Motorbremse auf. D.h. mittels der Bremspedaleinrichtung 18 kann ein Signal erzeugt werden, das eine unterstützende Motorbremse einleitet bzw. steuert.

Die Bremspedaleinrichtung 18 weist ferner vorteilhafterweise einen Anschluss für eine elektrische Verbindung zu einem Retarder zur Erzeugung einer Bremswirkung mittels des Retarders auf. D.h. die Bremspedaleinrichtung 18 kann ein elektrisches Signal zur Steuerung der Retarderbremse erzeugen.

Ferner weist die Bremspedaleinrichtung 18 vorteilhafterweise wenigstens einen Anschluss für eine elektrische Verbindung zu elektromotorischen Komponenten im Antriebsstrang des Fahrzeuges auf, wie bspw. zu einer Starter-Generatoreinheit, einer Hybrid-Einheit oder ähnliches, mittels der bzw. denen eine weitere unterstützende Bremswirkung erzielbar ist. D.h. die Bremspedaleinrichtung 18 erzeugt wenigstens ein elektrisches Signal zur Ansteuerung derartiger elektromotorischer Komponenten zur Erzeugung weiterer Bremswirkungen.

In einer nicht dargestellten Ausführung ist die Steuerungselektronik bzw. Steuerungslogik zur Steuerung der Bremsen an der Vorderachse 12 und/oder zur Steuerung der Bremsen der Hinterachse 14 in die Bremspedaleinrichtung 18 integriert, so dass die entsprechende Elektronik bzw. Logik in einem Modul entfällt. Die elektropneumatischen Ventile des Vorderachsmoduls 24 bzw. des Hinterachsmoduls 19 sind in diesem Fall von der Bremspedaleinrichtung 18 ansteuerbar.

Insgesamt bildet die Bremspedaleinrichtung 18 somit eine Schnittstelle zwischen dem Fahrer, der Bremsanlage 16 und dem restlichen Fahrzeug.

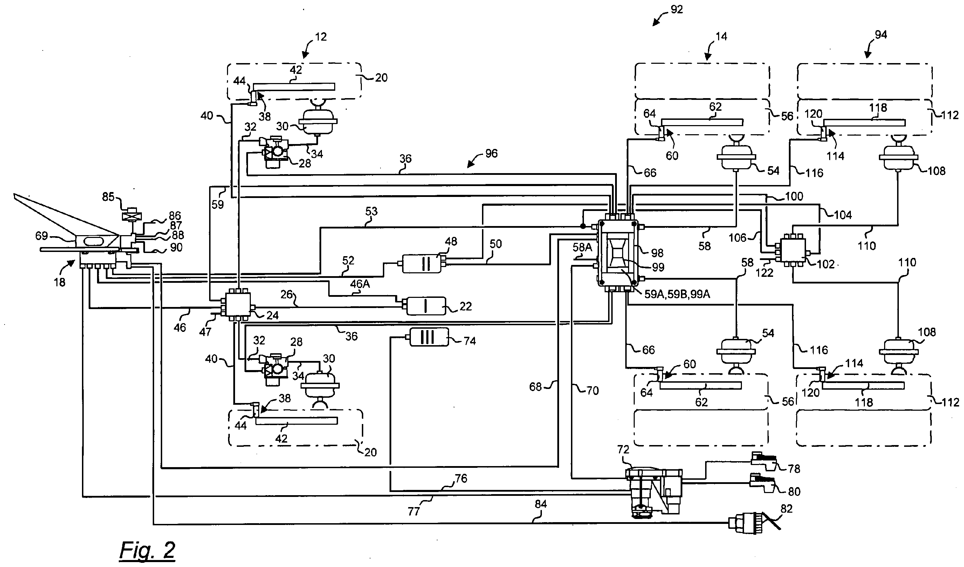

Fig. 2 zeigt schematisch ein dreiachsiges Fahrzeug 92 ebenfalls mit einer Vorderachse 12 und einer Hinterachse 14 sowie einer ersten Zusatzachse 94 als zweite Hinterachse sowie einer Bremsanlage 96 mit drei Bremskreisen einer mittels der Bremspedaleinrichtung 18 betätigbaren Betriebsbremse. Das zweite Ausführungsbeispiel gleicht in wesentlichen Teilen dem ersten Ausführungsbeispiel. Insbesondere bezeichnen gleiche Bezugsziffern gleiche Teile.

Ein erstes Modul 98 gleicht in seiner Funktionalität in Bezug auf die Bremsen der Vorderachse 12 und der Hinterachse 14 dem Hinterachsmodul 19 des ersten Ausführungsbeispiels gemäß Fig. 1. Eine Steuereinrichtung 99 in dem ersten Modul 98 erzeugt jedoch zusätzlich ein Bremskraftsteuersignal für Bremsen der ersten Zusatzachse 94 und steuert mittels einer Steuerungslogik 99A in Abhängigkeit von dem Bremskraftsteuersignal über eine elektrische Leitung 100 ein oder mehrere Ventile in einem zweiten Modul 102 zur Aussteuerung von Druckluft an. Das zweite Modul 102 ist ferner über eine Druckluftleitung 104 mit dem Druckluftvorratsbehälter 48 und über eine Druckluftleitung 106 mit der Druckluftleitung 53 und darüber mit der Bremspedaleinrichtung 18 verbunden. Über die Druckluftleitung 104 bereitgestellte und ausgesteuerte Druckluft wird Bremszylindern 108 über Druckluftleitungen 110 bereitgestellt. Eine pneumatische Redundanz bei einem Ausfall der Elektrik wird über die Druckluftleitung 106 sichergestellt.

An Rädern 112 der ersten Zusatzachse 94 sind ferner Radgeschwindigkeitssensiermittel 114 vorgesehen, welche über elektrische Leitungen 116 mit dem ersten Modul 98 verbunden sind. Zur Ermittlung der Raddrehgeschwindigkeiten der Räder 112 weist jedes Rad 112 zudem ein drehfest verbundenes Polrad 118 auf, welches mit einem aktiv oder passiv arbeitenden Rad-Sensor 120 elektromagnetisch gekoppelt ist. Das erste Modul 98 kann mittels der Radgeschwindigkeitssensiermittel 114 ein Blockieren oder einen erhöhten Schlupf der Räder 112 feststellen, in Erwiderung hierauf Steuersignale an das zweite Modul 102 senden und über das bzw. die Ventile in dem zweiten Modul 102 den Druck in den Druckluftleitungen 110 reduzieren und somit die Bremskräfte an den Rädern 112 vermindern. Auf diese Weise wird ein Antiblockierfunktion für die Räder 112 bereitgestellt.

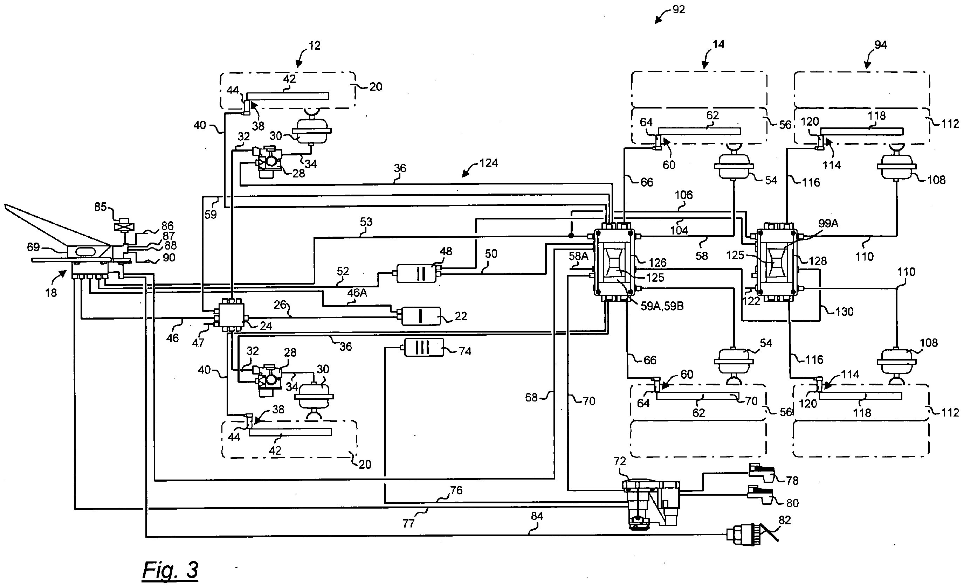

Fig. 3 zeigt schematisch das dreiachsige Fahrzeug 92 von Fig. 2 mit einer Bremsanlage 124 gemäß einem dritten Ausführungsbeispiel. Die Bremsanlage 124 gleicht im Wesentlichen der Bremsanlage 96 des zweiten Ausführungsbeispiels. Insbesondere bezeichnen gleiche Bezugsziffern wieder gleiche Teile. Die Bremsanlage 124 weist jedoch nun eine Steuereinrichtung 125 auf, die in ein als Hinterachsmodul ausgebildetes erstes Modul 126 und ein als erste Zusatzachsmodul ausgebildetes weiteres erstes Modul 128 integriert ist. Das Hinterachsmodul 126 gleicht hierbei dem Hinterachsmodul 19 des ersten Ausführungsbeispiels. Es weist jedoch zusätzlich einen Anschluss für eine Datenverbindung 130 auf, welche einen Datenaustausch mit dem Zusatzachsmodul 128 erlaubt. Insbesondere ein Bremsanforderungssignal wird über diese Datenleitung 130 an das Zusatzachsmodul 128 weitergeleitet. Aber auch weitere Informationen über den Bremsvorgang, bspw. für einen Bremseingriff einer Fahrdynamikregelung können über diese Datenleitung 130 ausgetauscht werden. Die Bremsen an der Zusatzachse 94 werden von dem Zusatzachsmodul 128 analog zu den Bremsen der Hinterachse 14 vom Hinterachsmodul 126 gesteuert. Insbesondere erfolgt die Berechnung von Bremsdrücken und die Steuerung eines Eingriffs des Antiblockiersystems im Unterschied zum zweiten Ausführungsbeispiel an dem Zusatzachsmodul 128. Deshalb verbinden die elektrischen Leitungen 116 nunmehr die Radsensoren 120 mit dem Zusatzachsmodul 128. Das Hinterachsmodul 126 unterscheidet sich im Wesentlichen dadurch vom Zusatzachsmodul 128, dass es zusätzlich zur Steuerung von Bremsen einer Achse 14 bzw. 94 noch das Ventil bzw. die Ventile in dem Vorderachsmodul 24 steuert und das Anhängersteuerventil 72 ansteuert. Die Steuerungslogik 99A für die Zusatzachse 94 ist in dem Zusatzachsmodul 128 angeordnet.

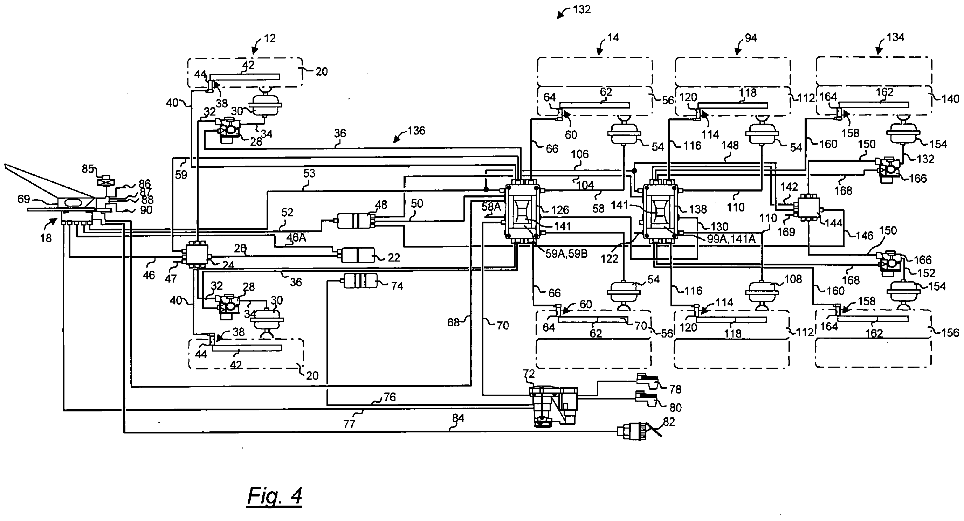

Fig. 4 zeigt schematisch ein vierachsiges Fahrzeug 132 mit der Vorderachse 12, der Hinterachse 14, der ersten Zusatzachse 94 und einer zweiten Zusatzachse 134, welche eine dritte Hinterachse ist, sowie eine Bremsanlage 136. Diese Bremsanlage 136 gleicht in Bezug auf die Betriebsbremsfunktion für die Räder 20, 56 und 112 an den Achsen 12, 14 und 94 im Wesentlichen der Bremsanlage 124 des dritten Ausführungsbeispiels gemäß Fig. 3. Anstelle des ersten Zusatzachsmoduls 128 ist jedoch nun ein erstes Modul 138 als erstes Zusatzachsmodul bzw. zweites Hinterachsmodul 144 verbaut, welches zusätzlich Bremsen an Rädern 140 der zweiten Zusatzachse 134 steuert. Eine Steuereinrichtung 141 ist in den beiden ersten Modulen 126 und 138 integriert. Die Steuerung von Bremsen durch das erste Zusatzachsmodul 138 erfolgt analog zu der Steuerung der Bremsen an der Vorderachse 12 durch das Hinterachsmodul 126. Das Hinterachsmodul 126 unterscheidet sich insbesondere dadurch vom ersten Zusatzachsmodul 138, dass es zusätzlich noch zur Ansteuerung des Anhängersteuerventils 72 ausgebildet ist. Das erste Zusatzachsmodul 138 weist die Steuerungslogik 99A für die Bremsen der ersten Zusatzachse 94 und eine Steuerungslogik 141 A für die Bremsen der zweiten Zusatzachse 134 auf.

Das erste Zusatzachsmodul 138 steuert über eine elektrische Leitung 142 ein zweites Modul 144 als zweites Zusatzachsmodul bzw. drittes Hinterachsmodul an. Insbesondere steuert es ein oder mehrere Ventile in dem zweiten Zusatzachsmodul 144. Weitere Anschlüsse verbinden das zweite Zusatzachsmodul 144 über eine Druckluftleitung 146 mit dem Druckluftvorratsbehälter 48 und über eine Druckluftleitung 148 mittelbar über die Druckluftleitungen 106 und 53 mit der Bremspedaleinrichtung 18. Somit ist ein Druck in Druckluftleitungen 150 und 152 zu Bremszylindern 154 sowohl elektropneumatisch mittels des bzw. der Ventile in dem zweiten Zusatzachsmodul 144 oder pneumatisch mittels der Bremspedaleinrichtung 18 über die Druckluftleitungen 53, 106 und 148 aussteuerbar.

An den Rädern 140 der zweiten Zusatzachse 134 sind wiederum Radgeschwindigkeitssensiermittel 158 vorgesehen, welche über elektrische Leitungen 160 mit dem ersten Zusatzachsmodul 138 verbunden sind. Die Radgeschwindigkeitssensiermittel 158 weisen jeweils ein mit dem jeweiligen Rad 140 drehfest verbundenes Polrad 162 auf, welches mit einem aktiv oder passiv arbeitenden Rad-Sensor 164 elektromagnetisch gekoppelt ist. Ein Blockieren bzw. erhöhter Schlupf der Räder 140 kann somit von dem ersten Zusatzachsmodul 138 erkannt werden. In Erwiderung auf ein erkanntes Blockieren oder einen erhöhten Schlupf der Räder 140 sind Ventileinheiten 166 über elektrische Leitungen 150 und 168 ansteuerbar, mittels derer die Druckluftleitungen 132 zumindest teilweise entlüftet und damit die Bremskräfte an den Rädern 140 reduziert werden können.

Das zweite Zusatzachsmodul 144 kann ferner einen Anschluss 169 für elektrische Energieversorgung aufweisen.

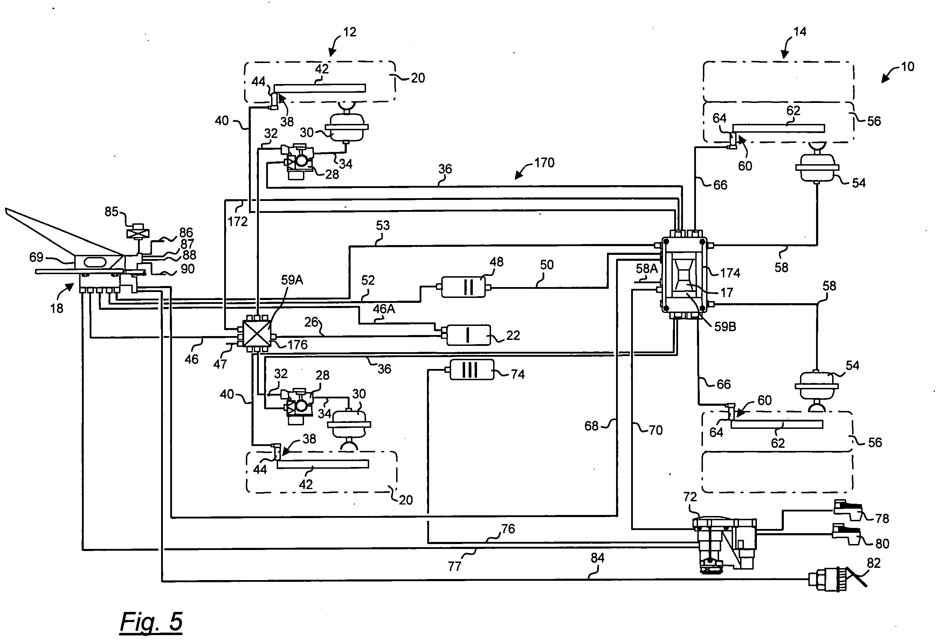

Fig. 5 zeigt schematisch das zweiachsige Fahrzeug 10 von Fig. 1 mit der Vorderachse 12 und der Hinterachse 14 sowie einer Bremsanlage 170, welche im Wesentlichen der Bremsanlage 16 des ersten Ausführungsbeispiels gleicht. Wiederum bezeichnen gleiche Bezugsziffern gleiche Teile.

Im Unterschied zum ersten Ausführungsbeispiel gemäß Fig. 1 ist jedoch anstelle der elektrischen Leitung 59 zwischen dem ersten Modul 19 und dem zweiten Modul 24 eine Datenleitung 172 zwischen einem ersten Modul 174 und einem zweiten Modul 176 vorgesehen. Im Vergleich zum ersten Ausführungsbeispiel ist zusätzliche Intelligenz, nämlich die Steuerungslogik 59A, von dem ersten Modul 174 auf das zweite Modul 176 verlagert. Das bzw. die Ventile in dem zweiten Modul 176 werden nunmehr nicht direkt vom zweiten Modul 176 aus angesteuert. Das zweite Modul 176 erhält nämlich nun Daten über die Datenleitung 172, anhand derer es selbstständig das bzw. die Ventile in dem zweiten Modul 176 steuert. Die Berechnung der Bremsdrücke und Erzeugung des Bremskraftsignals erfolgt weiterhin in dem ersten Modul 174 durch die dort angeordnete Steuereinrichtung 17. Zur Versorgung mit elektrischer Energie weist das zweite Modul 176 einen Anschluss 47 für eine Verbindung mit einer elektrischen Energieversorgung auf.

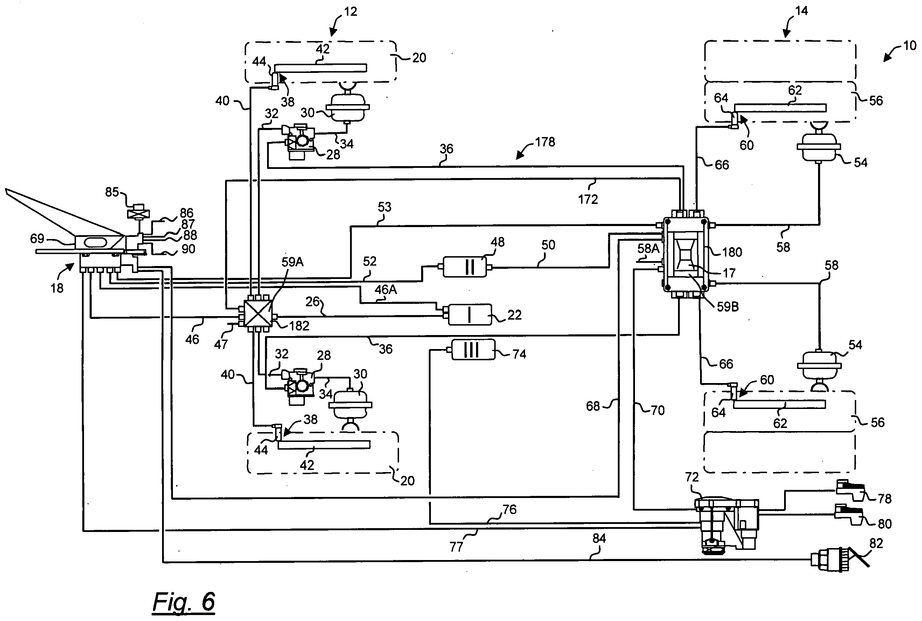

Fig. 6 zeigt schematisch das zweiachsige Fahrzeug 10 mit der Vorderachse 12 und der Hinterachse 14 des fünften Ausführungsbeispiels gemäß Fig. 5 sowie einer Bremsanlage 178, welche sich lediglich geringfügig von der Bremsanlage 170 gemäß Fig. 5 unterscheidet. Gleiche Bezugsziffern bezeichnen wieder gleiche Teile.

Das erste Modul 180 ist im Gegensatz zu dem ersten Modul 174 von Fig. 5 nicht mit den Radgeschwindigkeitssensiermitteln 38 verbunden. Die elektrischen Leitungen 40 verbinden die Radgeschwindigkeitssensiermittel 38 nun mit dem zweiten Modul 182, welches über geeignete Anschlüsse hierfür verfügt. Daten der sensierten Radgeschwindigkeiten werden über die Datenleitung 172 an das erste Modul 180 übermittelt, welches über die elektrischen Leitungen 36 die Ventileinheiten 28 steuert.

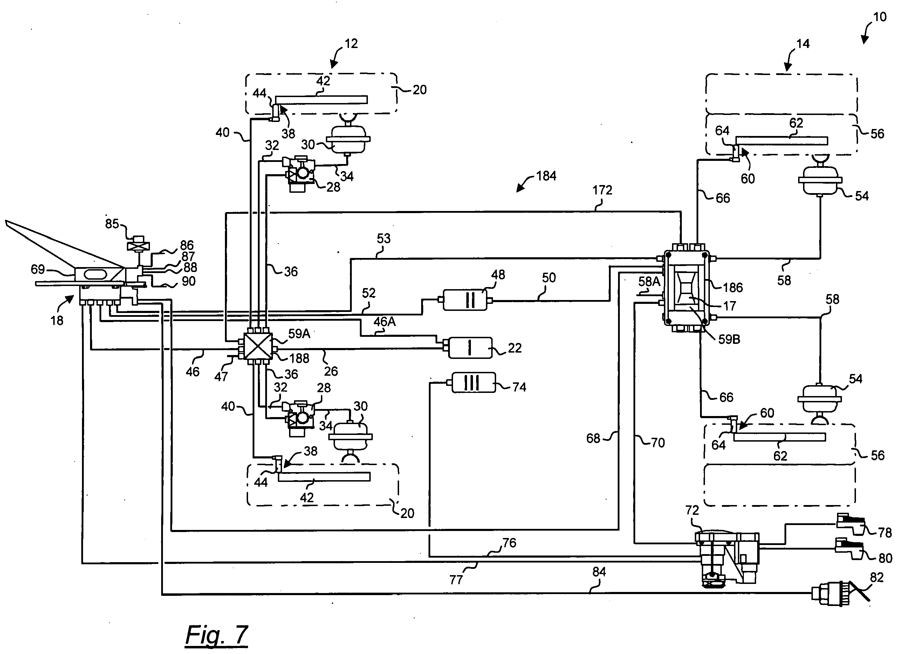

Fig. 7 zeigt schematisch das zweiachsige Fahrzeug 10 mit der Vorderachse 12 und der Hinterachse 14 des sechsten Ausführungsbeispiels sowie einer Bremsanlage 184, welche sich im Wesentlichen durch die Ansteuerung der Ventileinheiten 28 von der Bremsanlage 178 des sechsten Ausführungsbeispiels unterscheidet. Die Bremsanlage 184 weist ein erstes Modul 186 und ein zweites Modul 188 auf. Das zweite Modul 188 ist über die elektrischen Leitungen 36 mit den Ventileinheiten 28 verbunden und steuert diese Ventileinheiten 28. Die Bremsanlage 184 gleicht ansonsten der Bremsanlage 176 von Fig. 6. Gleiche Bezugsziffern bezeichnen hierbei gleiche Teile.

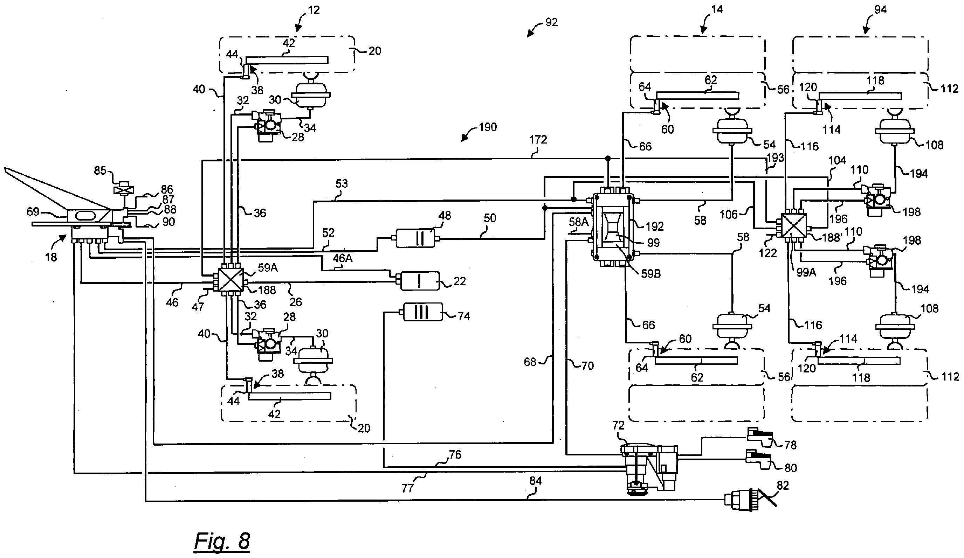

Fig. 8 zeigt schematisch das dreiachsige Fahrzeug 92 des zweiten Ausführungsbeispiels von Fig. 2 mit der Vorderachse 12, der Hinterachse 14 und der Zusatzachse 94 als zweiter Hinterachse sowie einer Bremsanlage 190. Gleiche Bezugsziffern bezeichnen gleiche Teile. Vereinfacht dargestellt werden die Bremsen der Zusatzachse 94 analog zu den Bremsen der Vorderachse 12 gesteuert. Hierfür ist ein zweites Modul 188' oder Zusatzachsmodul vorgesehen, welches wie das Vorderachsmodul bzw. zweite Modul 188 ausgebildet ist. Ein Hinterachsmodul bzw. erstes Modul 192 berechnet folglich Bremskräfte für Bremsen an allen drei Achsen 12, 14 und 94 und steuert bzw. regelt entsprechende Bremskräfte mittels zugehöriger Bremskraftsteuersignale. Das zweite Achsmodul 188' ist über eine Datenleitung 193 mit dem ersten Modul 192 verbunden. Über diese Datenleitung 193 empfängt das zweite Modul 188' Daten, anhand derer es ein oder mehrere Ventile in dem zweiten Modul 188' ansteuert. Ein ausgesteuerter Druck gelangt über die Druckluftleitungen 110 und Druckluftleitungen 194 an die Bremszylinder 108. Das zweite Modul 188 kann ein Blockieren bzw. einen erhöhten Schlupf der Räder 112 feststellen, in Erwiderung hierauf über elektrische Leitungen 196 Ventileinheiten 198 zwischen den Druckluftleitungen 110 und 194 zum zumindest teilweisen Entlüften der Druckluftleitungen 194 ansteuern. Zur Versorgung mit elektrischer Energie weist das zweite Modul 188' einen Anschluss 122 für eine Verbindung mit einer elektrischen Energieversorgung auf.

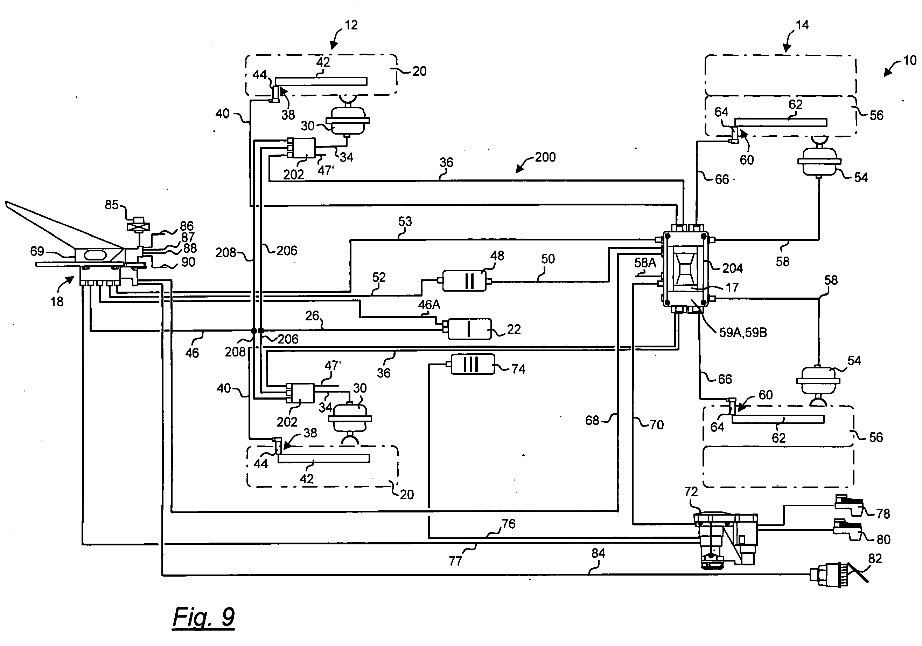

Fig. 9 zeigt schematisch das zweiachsige Fahrzeug 10 mit der Vorderachse 12 und der Hinterachse 14 sowie einer Bremsanlage 200 gemäß einem neunten Ausführungsbeispiel. Dieses Ausführungsbeispiel unterscheidet sich im Wesentlichen dadurch von dem ersten Ausführungsbeispiel gemäß Fig. 1, dass anstelle des zweiten Moduls 24 und der Ventileinheiten 28 zwei zweite Module 202 als Radmodule an den Rädern 20 der Vorderachse 12 vorgesehen sind. Gleiche Bezugsziffern bezeichnen gleiche Teile.

Ein erstes Modul 204 gleicht in seiner Funktion dem ersten Modul 19 von Fig. 1. Es entfällt jedoch die Notwendigkeit, neben den elektrischen Leitungen 36 weitere elektrische Leitungen für eine Signalübertragung zu den zweiten Modulen 202 vorzusehen. Elektrische Signale, welche im ersten Ausführungsbeispiel über die elektrischen Leitungen 36 und 59 transportiert wurden, können nun gemeinsam über die elektrischen Leitungen 36 an die zweiten Module 202 gelangen. Diese zweiten Module 202 sind über Druckluftleitungen 206 und die Druckluftleitung 26 mit dem Druckluftvorratsbehälter 22 verbunden. Ein pneumatisch ausgesteuerter Redundanzdruck wird den zweiten Modulen 202 über die Druckluftleitung 46 und Druckluftleitungen 208 zugeführt. Ein Ventil oder Ventile in den zweiten Modulen 202 werden direkt über die elektrischen Leitungen 36 von dem ersten Modul 204 gesteuert. Die zweiten Module 202 verfügen jedoch über keine eigene Intelligenz, d.h. sie weisen keine eigene Steuerlogik auf.

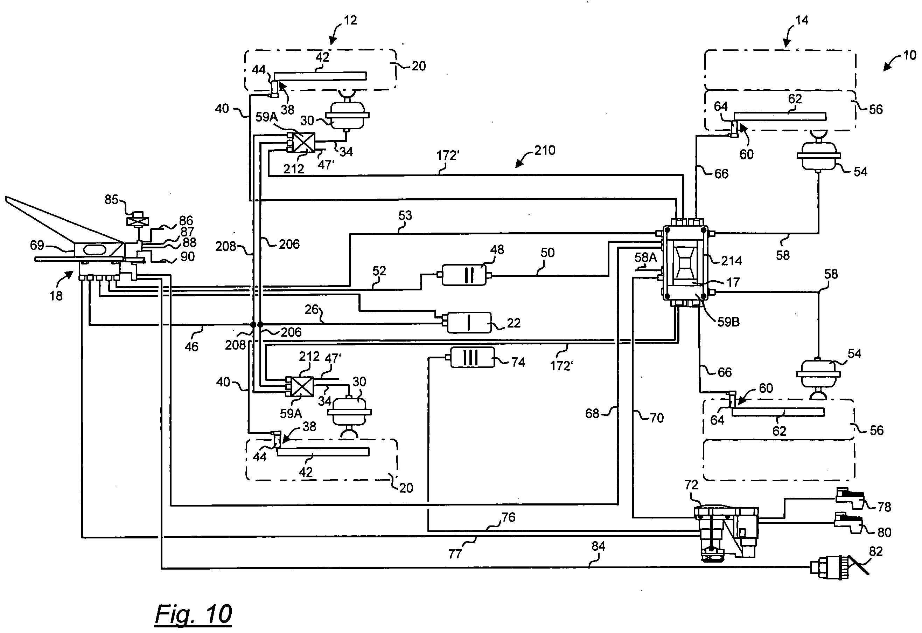

Fig. 10 zeigt schematisch das zweiachsige Fahrzeug 10 von Fig. 9 mit der Vorderachse 12 und der Hinterachse 14 sowie einer Bremsanlage 210 gemäß einem zehnten Ausführungsbeispiel. Gleiche Bezugsziffern bezeichnen gleiche Teile. Dieses zehnte Ausführungsbeispiel verhält sich in etwa so zu dem neunten Ausführungsbeispiel gemäß Fig. 9 wie das fünfte Ausführungsbeispiel gemäß Fig. 5 zu dem ersten Ausführungsbeispiel gemäß Fig. 1. Im Vergleich zu den zweiten Modulen 209 des neunten Ausführungsbeispiels weisen Radmodule bzw. zweite Module 212 zusätzliche Intelligenz derart auf, dass sie ein oder mehrere beinhaltete Ventile selbsttätig ansteuern können. Informationen für dieses Ansteuern erhalten die zweiten Module über Datenleitungen 172' von einem ersten Modul 214, welches in seiner Funktionalität dem ersten Modul 174 des fünften Ausführungsbeispiels gemäß Fig. 5 gleicht. Die zweiten Module 202 weisen ferner jeweils einen Anschluss 47' für elektrische Energieversorgung auf.

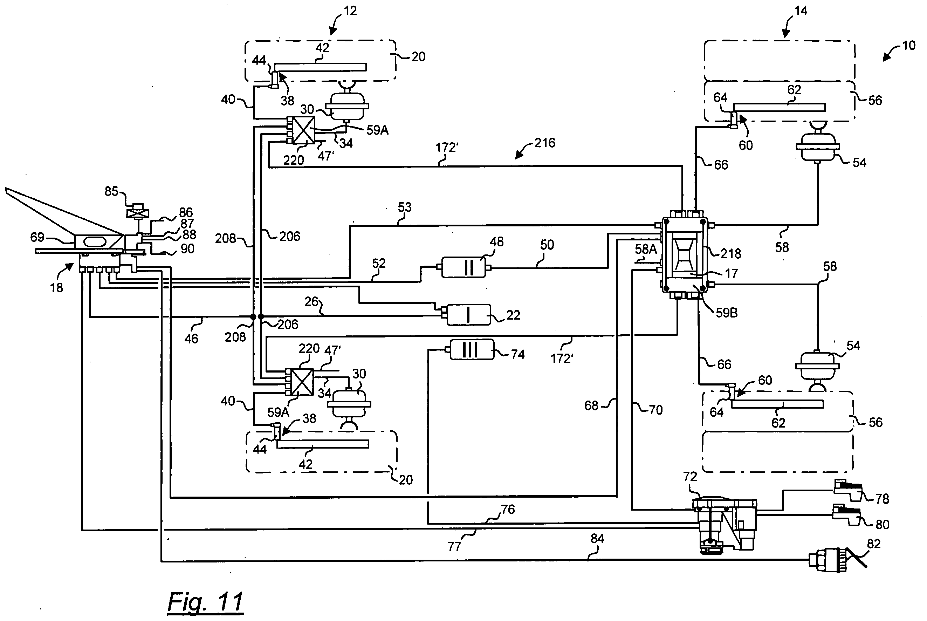

Fig. 11 zeigt schematisch das zweiachsige Fahrzeug 10 mit der Vorderachse 12 und der Hinterachse 14 sowie einer Bremsanlage 216 gemäß einem elften Ausführungsbeispiel. Dieses Ausführungsbeispiel gleicht im Wesentlichen dem zehnten Ausführungsbeispiel gemäß Fig. 10 und verhält sich zu jenem Ausführungsbeispiel wie das siebte Ausführungsbeispiel gemäß Fig. 7 zu dem fünften Ausführungsbeispiel gemäß Fig. 5. Dabei bezeichnen gleiche Bezugsziffern wieder gleiche Teile. Die Bremsanlage 216 weist ein erstes Modul 218 als Hinterachsmodul und zwei zweite Module 220 als Radmodule an den Rädern 20 der Vorderachse 12 auf. Diese zweiten Module 220 weisen eine Intelligenz auf, mittels welcher ein Blockieren oder einen erhöhten Schlupf der Räder 20 feststellbar und in Erwiderung hierauf die Druckluftleitungen 34 zumindest teilweise entlüftbar sind. Hierfür sind die Radgeschwindigkeitssensiermittel 38 über die elektrischen Leitungen 40 direkt mit den zweiten Modulen 220 verbunden. Die Steuereinrichtung 17 ist in dem ersten Modul 218 angeordnet. Die zweiten Module 220 verfügen jeweils über eine Steuerungslogik zur Ansteuerung eines oder mehrerer Ventile in den zweiten Modulen 220.

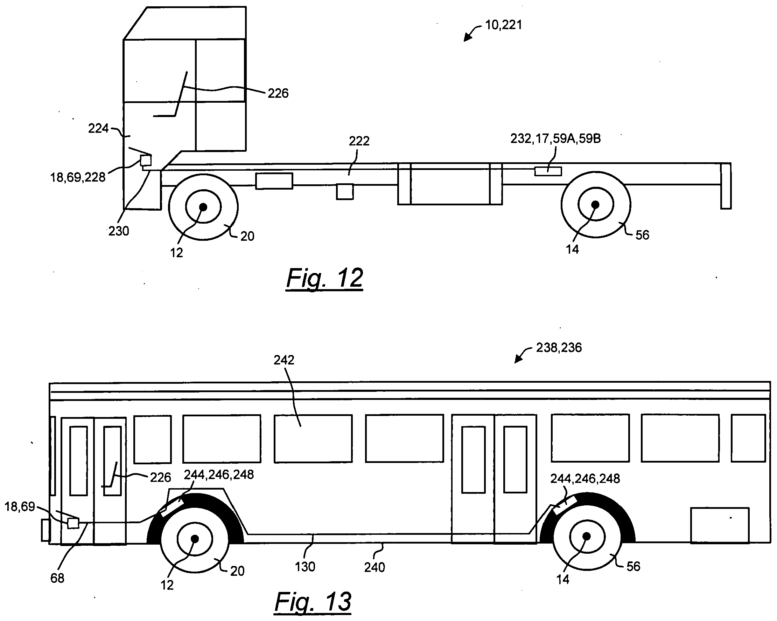

Fig. 12 zeigt das Fahrzeug 10 des ersten Ausführungsbeispiels, welches als Lastkraftwagen ausgebildet ist, mit einer erfindungsgemäßen Bremsanlage 221 in einer Seitenansicht in vereinfachter schematischer Darstellung. Das Fahrzeug 10 weist ein Tragwerk 222 und eine Kabine 224 auf. Die Kabine 224 ist als Frontlenkerfahrerhaus mit mechanischer oder hydraulischer Fahrerhaus-Kippeinrichtung ausgebildet und wird von dem Tragwerk 222 getragen. Dieses Tragwerk 222 ist als Leiterrahmen ausgebildet und kann neben dem Fahrerhaus bzw. der Kabine 224 Lasten, wie bspw. Container, tragen und transportieren. Das Tragwerk 222 bzw. der Leiterrahmen wird von den Rädern 20 der Vorderachse 12 und den Rädern 56 der Hinterachse 14 getragen.

Die Kabine 224 weist einen Fahrersitz 226 und die Bremspedaleinrichtung 18 mit dem Bremswertgeber 69 auf. In die Bremspedaleinrichtung 18 ist eine Schnittstelle 228 integriert. Ein mittels des Bremswertgebers 69 erzeugtes Bremsanforderungssignal wird an die Schnittstelle 228 und von dort über eine Datenbusverbindung 230 von der Bremspedaleinrichtung 18 in der Kabine 224 an die in ein Hinterachsmodul 232 integrierte Steuereinrichtung 17 geleitet. Die Steuereinrichtung 17 steuert bzw. regelt in Erwiderung auf das Bremsanforderungssignal sowohl für Bremsen an den Rädern 20 der Vorderachse 12 als auch für Bremsen an den Rädern 56 der Hinterachse 14 mittels zugehöriger Bremskraftsteuersignale entsprechende Bremskräfte.

Über die Schnittstelle 228 und die Datenbusverbindung 230 werden weitere Daten zwischen Einrichtungen in der Kabine und Einrichtungen am Tragwerk ausgetauscht. Bspw. kann ein Fahrer in der Kabine mittels einer Eingabevorrichtung ein Signal zum Einlegen einer Parkbremse erzeugen. Dieses Signal wird an die Schnittstelle 228 gesendet, welche entsprechende Daten über die Datenbusverbindung 230 an die Steuereinrichtung 17 übermittelt. Das Hinterachsmodul 232 weist neben der Steuereinrichtung 17 für die Betriebsbremse deshalb vorteilhafterweise auch einen Feststellbremsmodulator auf. Alternativ kann ein Feststellbremsmodulator jedoch auch eine separate Einheit bilden. Daten zur Steuerung einer Feststellbremsfunktion werden dann entweder von dem Hinterachsmodul 232 bzw. der Steuereinrichtung 17 an diese separate Einheit weitergeleitet oder auch schon vorher über eine Verzweigung bzw. einen Verteiler in der Datenbusverbindung 230 abgezweigt.

Über die Schnittstelle 228 und die Datenbusverbindung 230 können darüber hinaus bspw. auch an dem Tragwerk angeordnete Leuchten angesteuert werden. Diese Leuchten können Bremslichter, ein Fahrlicht oder auch Blinklichter sein. Über die Datenbusverbindung 230 kann somit jegliche Kommunikation zwischen Einrichtungen in oder an der Kabine 224 und Einrichtungen an dem Tragwerk 222 geführt werden.

Fig. 13 zeigt eine Bremsanlage 236 in einem Fahrzeug 238, welches als Omnibus ausgebildet ist, in einer Seitenansicht in vereinfachter Darstellung. Die Achsen 12 und 14 mit den Rädern 20 bzw. 56 tragen in diesem Fall eine selbsttragende Karosserie, welche ein Tragwerk 240 bildet. Das Fahrzeug 238 weist eine Kabine 242 auf, welche von dem Tragwerk 240 bzw. der Karosserie getragen und von dieser Karosserie eingefasst wird und einen Innenraum in der Karosserie bildet. Die Kabine 242 weist den Fahrersitz 226 und zahlreiche weitere Sitzplätze für Fahrgäste auf. Ein mittels des Bremswertgebers 69 der Bremspedaleinrichtung 18 erzeugtes Bremsanforderungssignal wird über die elektrische Leitung 68 Steuereinrichtungen 244 zugeleitet. Die Steuereinrichtungen 244 sind in vier Radmodule 246 integriert. Die Radmodule 246 sind gleichermaßen ausgebildet und prinzipiell gegeneinander austauschbar. Die vier Radmodule 246 sind über Datenleitungen 130 miteinander verbunden und tauschen über diese Datenleitungen 130 Daten zur Steuerung von Bremsen an den Rädern 20 und 56 aus. Die Radmodule 246 sind im Bereich der Räder 20 und 56 an Radkästen am Tragwerk 240 angeordnet, von wo aus sie leicht von außen für eventuelle Wartungs- und/oder Reparaturarbeiten zugänglich sind.

Jedes Radmodul 246 ist somit einem Rad 20 bzw. 56 zugeordnet, weist ein oder mehrere Ventile auf und steuert mittels dieses bzw. dieser Ventile einen Bremsdruck zur Betätigung einer Bremse des jeweiligen Rades 20 bzw. 56 aus. Die Steuereinrichtung 244 jedes Radmoduls 246 ist hingegen jeweils vierfach ausgebildet. Somit kann von jedem Radmodul 246 ein Bremskraftsteuersignal für eine Bremse an jedem der Räder 20 und 56 berechnet werden. Durch Vergleich der vier ermittelten Bremskraftsteuersignale können selbsttätig eventuelle Fehlfunktionen in der Steuereinrichtung erkannt und Auswirkungen einer fehlerhaften Steuereinrichtung auf das Bremsverhalten vermieden werden. Das bzw. die Ventile an einem Radmodul 246 werden nämlich von Steuerungslogiken 248 gesteuert, welchen Bremskraftsteuersignale von einer Steuereinrichtung 244 zugeleitet werden, die als funktionsfähig erkannt ist. Alternativ können die Steuerungslogiken auch vierfach redundant ausgebildet sein, um ggf. Ventile in vier Radmodulen 246 direkt ansteuern zu können.

In einer hiervon abweichenden, nicht dargestellten Ausführungsform der Erfindung ist die Steuereinrichtung zweifach ausgebildet und auf zwei Achsmodule verteilt, welche jeweils zwei Radmodule 246 ersetzen. Diese zwei Achsmodule können zwar keine Fehlfunktionen des jeweils anderen Achsmoduls erkennen. Sie können jedoch bei einem Ausfall einer Steuereinrichtung die Funktionen der ausgefallenen Steuereinrichtung übernehmen. Die Steuereinrichtung bzw. Achsmodule sind auch in diesem Fall bevorzugt an jeweils einem Radkasten an den Achsen 12 und 14 angeordnet.

In einer weiteren alternativen und nicht dargestellten Ausführungsform sind die Bremsen an den Rädern 20 und/oder 56 zusätzlich oder alternativ elektromechanisch betätigbar. Ggf. kann somit auf Ventile in Radmodulen verzichtet werden. Eine pneumatische Redundanz kann vorhanden sein, ggf. jedoch auch entfallen. Zahlreiche Komponenten der Bremsanlage können mehrfach ausgebildet sein, um das Ausfallrisiko der gesamten Bremsanlage zu reduzieren. Insbesondere können alle elektrischen Komponenten zwei Anschlüsse für zwei Stromversorgungen, insbesondere mittels zweier Batterien, aufweisen. Mittels zwei Sensoren am Bremswertgeber 228 können zwei Bremsanforderungssignale erzeugt werden. Diese Bremsanforderungssignale können über zwei separate Leitungen an die Steuereinrichtung geleitet werden. Bei Ausfall einer Batterie bzw. einer Energieversorgungsquelle, eines Sensors im Bremswertgeber 69, einer elektrischen Leitung 68 bzw. Datenbusverbindung 230 oder im Falle der redundanten Ausbildung der Steuereinrichtung auch bei einem Ausfall einer Steuereinrichtung kann somit ein Fahrzeug immer noch sicher abgebremst und somit sicher betrieben werden.

Die Ausführungsbeispiele gemäß der Fig. 1 bis 11 zeigen besonders bevorzugte Ausführungsformen der Erfindung. Sie stellen jedoch keine Beschränkung dar. Insbesondere lässt sich die Erfindung auf Fahrzeuge mit beliebig vielen Achsen erweitern. Jedes erste oder zweite Modul kann Steuerungsfunktionen für ein oder mehrere Bremsen an ein oder mehreren Rädern und/oder Achsen übernehmen. Die Steuereinrichtung kann auf beliebig viele Module am Tragwerk des Fahrzeugs verteilt sein. Die Steuereinrichtung ist hierbei immer außerhalb einer Kabine des Fahrzeugs angeordnet.

Andere, insbesondere der Steuereinrichtung nachgeschaltete, Teile der Bremsanlage können jedoch auch in der Kabine angeordnet sein.

Insbesondere ist es bspw. möglich, das zweite Modul 188 im siebten Ausführungsbeispiel gemäß Fig. 7 und damit die Steuerungslogik 59A in die Bremspedaleinrichtung 18 zu integrieren. Die Steuereinrichtung ist somit weiterhin in dem ersten Modul am Tragwerk angeordnet, während die Ansteuerung eines oder mehrerer Ventile mittels der Steuerungslogik 59A und die Aussteuerung eines pneumatischen Drucks mittels dieser Ventile in der Bremspedaleinrichtung 18 erfolgt.

Auch wenn in den beigefügten Zeichnungen nicht explizit dargestellt, weist eine erfindungsgemäße Bremsanlage vorteilhafterweise eine Feststellbremseinrichtung mit Federspeicherbremszylindern, insbesondere kombinierten Federspeicher-/Membranbremszylindern auf, wobei die Feststellbremsfunktion mittels der Federspeicherteile dieser Bremszylinder bereitstellbar ist. In diesem Fall ist die Feststellbremseinrichtung als elektropneumatische Feststellbremse ausgebildet. Zusätzlich oder alternativ ist die Feststellbremse als elektromechanische Feststellbremse ausgebildet, so dass die Feststellbremsfunktion mittels elektromechanischer Bremskomponenten bereitstellbar ist. Die Feststellbremsfunktion kann alternativ konventionell mit rein pneumatisch betriebenen Bauteilen, ohne elektrische Steuerung, dargestellt werden.

In den vorstehenden Ausführungsbeispielen gemäß der Fig. 1 bis 13 ist das erfindungsgemäße Steuergerät in eine Steuereinrichtung 17, 99, 125, 141, 244 und dort vorzugsweise in einen Hinterachsmodulator integriert. Die Erfindung umfasst aber auch Ausführungsformen, bei denen das Steuergerät nicht in einer anderen Einrichtung integriert sondern als eigenständige bauliche Einheit am Rahmen des Fahrzeugs befestigt ist.

## Patentansprüche

1. Steuergerät zur Steuerung einer Bremsanlage eines Fahrzeugs (10; 92; 132; 238), mit ABS-Leitungen (40; 66), welche von dem Steuergerät (17;99;125;141 ;244) zu Raddrehzahlsensoren (38; 60) führen,
- wobei das Fahrzeug (10; 92; 132; 238) ein Tragwerk (222; 240) und eine von dem Tragwerk (222; 240) getragene und wenigstens einen Fahrersitz (226) aufweisende Kabine (224; 242) aufweist,
- wobei das Steuergerät (17; 99; 125; 141; 244) außerhalb der Kabine (224; 242) an dem Tragwerk (222; 240) anordenbar ist,
**dadurch gekennzeichnet, dass**
- die ABS-Leitungen (40; 66), welche von dem Steuergerät (17; 99; 125; 141; 244) zu Raddrehzahlsensoren (38; 60) führen, als Antennen zum Empfang von Signalen von Reifendruckkontrollmodulen, welche den Reifendruck detektieren und an oder in Rädern (20; 56) oder Reifenventilen des Fahrzeugs (10; 92; 132; 238) montiert sind oder als elektrische Zuleitungen zu in Radhäusern des Fahrzeugs (10; 92; 132; 238) angebrachten Antennen zum Empfang von Signalen der Reifendruckkontrollmodule genutzt werden.

2. Steuergerät nach Anspruch 1,
**dadurch gekennzeichnet, dass**
das Steuergerät (17; 99; 125; 141; 244) eine zusätzliche Funktionalität zur Steuerung eines Reifendruckkontrollsystems aufweist.

3. Steuergerät nach einem der vorhergehenden Ansprüche,
**dadurch gekennzeichnet, dass**
anhand der über die ABS-Leitungen (40; 66) übertragenen Signale der Reifendruckkontrollmodule eine Zuordnung der Reifendruckkontrollmodule zu Radhäusern oder Rädern (20; 56) des Fahrzeugs (10; 92; 132; 238) erfolgt.

4. Steuergerät nach einem der vorhergehenden Ansprüche,
**dadurch gekennzeichnet, dass**
das Steuergerät (17; 99; 125; 141; 244) eine zusätzliche Funktionalität zur Steuerung eines Feststellbremsmodulators, eines Antiblockiersystems, einer Fahrdynamikregeleinrichtung und/oder elektronisch gesteuerten Luftaufbereitungseinrichtung aufweist.

5. Steuergerät nach einem der vorhergehenden Ansprüche,
**dadurch gekennzeichnet, dass**
das Steuergerät (17; 99; 125; 141; 244) zusätzliche Funktionalitäten für Fahrerassistenzsysteme aufweist.

6. Steuergerät nach Anspruch 5,
**dadurch gekennzeichnet, dass**
das Fahrerassistenzsystem die Funktionen Spurhalteassistent (LDW), adaptive Geschwindigkeitsregelung (ACC), Totwinkelüberwachung (BSD) und/oder autonomes Notbremssystem (AEBS) aufweist.

7. Steuergerät nach einem der vorhergehenden Ansprüche,
**dadurch gekennzeichnet, dass**
das Steuergerät wenigstens einen Sensor zur Sensierung eines Fahrzustandes des Fahrzeugs aufweist.

8. Steuergerät nach Anspruch 7,
**dadurch gekennzeichnet, dass**
es sich bei dem Sensor um einen Beschleunigungssensor, Gierratensensor und/oder um einen Neigungssensor handelt.

9. Steuergerät nach einem der vorhergehenden Ansprüche,
**dadurch gekennzeichnet, dass**
von dem Steuergerät (17; 99; 125; 141; 244) in Erwiderung eines Bremsanforderungssignals einer in der Kabine (224; 242) angeordneten Bremspedaleinrichtung (18) mit einem Bremswertgeber (69), wenigstens ein Bremskraftsteuersignal zur Steuerung, insbesondere zum vom Bremsanforderungssignal abhängigen Erhöhen, Halten und Vermindern, der Bremskraft von wenigstens einer Bremse der Bremsanlage (16; 96; 124; 136; 170; 178; 184; 190; 200; 210; 216) erzeugbar ist.

10. Bremsanlage mit einem Steuergerät (17; 99; 125; 141; 244) nach einem der vorhergehenden Ansprüche.

11. Fahrzeug mit einem Steuergerät (17; 99; 125; 141; 244) zur Steuerung einer Bremsanlage des Fahrzeugs (10; 92; 132; 238),
- wobei das Fahrzeug (10; 92; 132; 238) ein Tragwerk (222; 240) und eine von dem Tragwerk (222; 240) getragene und wenigstens einen Fahrersitz (226) aufweisende Kabine (224; 242) aufweist,
- wobei das Steuergerät (17; 99; 125; 141; 244) außerhalb der Kabine (224; 242) an dem Tragwerk (222; 240) angeordnet ist,
**dadurch gekennzeichnet, dass**
- ABS-Leitungen (40; 66), welche von dem Steuergerät (17; 99; 125; 141; 244) zu Raddrehzahlsensoren (38; 60) führen, als Antennen zum Empfang von Signalen von Reifendruckkontrollmodulen, welche den Reifendruck detektieren und an oder in Rädern (20; 56) oder Reifenventilen des Fahrzeugs (10; 92; 132; 238) montiert sind oder als elektrische Zuleitungen zu in Radhäusern des Fahrzeugs (10; 92; 132; 238) angebrachten Antennen zum Empfang von Signalen der Reifendruckkontrollmodule genutzt werden.

12. Fahrzeug nach Anspruch 11,
**dadurch gekennzeichnet, dass**
das Steuergerät (17; 99; 125; 141; 244) nach einem der Ansprüche 2 bis 9 ausgebildet ist.

## Claims

1. Control device for controlling a brake system of a vehicle (10; 92; 132; 238), having ABS lines (40; 66) which lead from the control device (17; 99; 125; 141; 244) to wheel speed sensors (38; 60),
- wherein the vehicle (10; 92; 132; 238) has a supporting structure (222; 240) and a cabin (224; 242) which is supported by the supporting structure (222; 240) and has at least one driver's seat (226),
- wherein the control device (17; 99; 125; 141; 244) can be arranged outside the cabin (224; 242) on the supporting structure (222; 240),
**characterized in that**
- the ABS lines (40; 66) which lead from the control device (17; 99; 125; 141; 244) to wheel speed sensors (38; 60) are used as antennas for receiving signals from tyre pressure monitoring modules which detect the tyre pressure and are mounted on or in wheels (20; 56) or tyre valves of the vehicle (10; 92; 132; 238) or are used as electrical feed lines to antennas which are mounted in wheel housings of the vehicle (10; 92; 132; 238) and have the purpose of receiving signals of the tyre pressure monitoring modules.

2. Control device according to Claim 1, **characterized in that** the control device (17; 99; 125; 141; 244) has an additional functionality for controlling a tyre pressure monitoring system.

3. Control device according to one of the preceding claims, **characterized in that** the tyre pressure monitoring modules are assigned to wheel housings or wheels (20; 56) of the vehicle (10; 92; 132; 238) on the basis of the signals of the tyre pressure monitoring modules which are transmitted via the ABS lines (40; 66).

4. Control device according to one of the preceding claims, **characterized in that** the control device (17; 99; 125; 141; 244) has an additional functionality for controlling a parking brake modulator, an anti-lock brake system, a vehicle movement dynamics control device and/or an electronically controlled air processing device.

5. Control device according to one of the preceding claims, **characterized in that** the control device (17; 99; 125; 141; 244) has additional functionalities for driver assistance systems.

6. Control device according to Claim 5, **characterized in that** the driver assistance system has the functions of a lane departure warning system (LDW), an adaptive cruise controller (ACC), a blind spot monitoring device (BSD) and/or an autonomous emergency brake system (AEBS).

7. Control device according to one of the preceding claims, **characterized in that** the control device has at least one sensor for sensing a driving state of the vehicle.

8. Control device according to Claim 7, **characterized in that** the sensor is an acceleration sensor, yaw rate sensor and/or an inclination sensor.

9. Control device according to one of the preceding claims, **characterized in that** the control device (17; 99; 125; 141; 244) can generate, in response to a braking request signal of a brake pedal device (18), arranged in the cabin (224; 242), with a brake value signal generator (69), at least one braking.force control signal for controlling, in particular for increasing, holding and reducing the braking force of at least one brake of the brake system (16; 96; 124; 136; 170; 178; 184; 190; 200; 210; 216) as a function of the braking request signal.

10. Brake device having a control device (17; 99; 125; 141; 244) according to one of the preceding claims.

11. Vehicle having a control device (17; 99; 125; 141; 244) for controlling a brake system of the vehicle (10; 92; 132; 238),
- wherein the vehicle (10; 92; 132; 238) has a supporting structure (222; 240) and a cabin (224; 242) which is supported by the supporting structure (222; 240) and has at least one driver's seat (226),
- wherein the control device (17; 99; 125; 141; 244) is arranged outside the cabin (224; 242) on the supporting structure (222; 240),
**characterized in that**
- ABS lines (40; 66) which lead from the control device (17; 99; 125; 141; 244) to wheel speed sensors (38; 60) are used as antennas for receiving signals from tyre pressure monitoring modules which detect the tyre pressure and are mounted on or in wheels (20; 56) or tyre valves of the vehicle (10; 92; 132; 238) or are used as electrical feed lines to antennas which are mounted in wheel housings of the vehicle (10; 92; 132; 238) and have the purpose of receiving signals of the tyre pressure monitoring modules.

12. Vehicle according to Claim 11, **characterized in that** the control device (17; 99; 125; 141; 244) is designed according to one of Claims 2 to 9.

## Revendications

1. Contrôleur destiné à commander un système de freinage d'un véhicule (10 ; 92 ; 132 ; 238), comprenant des lignes d'ABS (40 ; 66) qui mènent du contrôleur (17 ; 99 ; 125 ; 141 ; 244) à des capteurs de vitesse de rotation de roue (38 ; 60),
- le véhicule (10 ; 92 ; 132 ; 238) possédant une structure porteuse (222 ; 240) et une cabine (224 ; 242) portée par la structure porteuse (222 ; 240) et possédant au moins un siège de conducteur (226),
- le contrôleur (17 ; 99 ; 125 ; 141 ; 244) pouvant être disposé à l'extérieur de la cabine (224 ; 242) sur la structure porteuse (222 ; 240),
**caractérisé en ce que**
- les lignes d'ABS (40 ; 66) qui mènent du contrôleur (17 ; 99 ; 125 ; 141 ; 244) à des capteurs de vitesse de rotation de roue (38 ; 60) sont utilisées comme des antennes servant à capter des signaux de modules de contrôle de la pression des pneus, lesquels détectent la pression des pneus et sont montés sur ou dans des roues (20 ; 56) ou des valves de pneu du véhicule (10 ; 92 ; 132 ; 238), ou sont utilisés comme des lignes d'arrivée électriques vers des antennes installées dans des corps de roue du véhicule (10 ; 92 ; 132 ; 238) servant à recevoir des signaux des modules de contrôle de la pression des pneus.

2. Contrôleur selon la revendication 1, **caractérisé en ce que** le contrôleur (17 ; 99 ; 125 ; 141 ; 244) possède une fonctionnalité supplémentaire pour la commande d'un système de contrôle de la pression des pneus.

3. Contrôleur selon l'une des revendications précédentes, **caractérisé en ce qu'**une association des modules de contrôle de la pression des pneus à des corps de roue ou des roues (20 ; 56) du véhicule (10 ; 92 ; 132 ; 238) est effectuée au moyen des signaux des modules de contrôle de la pression des pneus transmis par le biais des lignes d'ABS (40 ; 66).

4. Contrôleur selon l'une des revendications précédentes, **caractérisé en ce que** le contrôleur (17 ; 99 ; 125 ; 141 ; 244) possède une fonctionnalité supplémentaire pour la commande d'un modulateur de frein de stationnement, d'un système antiblocage, d'un dispositif de régulation de la dynamique de conduite et/ou d'un dispositif de conditionnement d'air à commande électronique.

5. Contrôleur selon l'une des revendications précédentes, **caractérisé en ce que** le contrôleur (17 ; 99 ; 125 ; 141 ; 244) possède des fonctionnalités supplémentaires pour des systèmes d'assistance au conducteur.

6. Contrôleur selon la revendication 5, **caractérisé en ce que** le système d'assistance au conducteur possède les fonctions d'alerte de franchissement de ligne (LDW), de régulation adaptative de la vitesse (ACC), de surveillance de l'angle mort (BSD) et/ou de freinage d'urgence autonome (AEBS).

7. Contrôleur selon l'une des revendications précédentes, **caractérisé en ce que** le contrôleur possède au moins un capteur destiné à détecter une condition de déplacement du véhicule.

8. Contrôleur selon la revendication 7, **caractérisé en ce que** le capteur est un capteur d'accélération, un capteur de taux de lacet et/ou un capteur d'inclinaison.

9. Contrôleur selon l'une des revendications précédentes, **caractérisé en ce qu'**en réplique à un signal de demande de freinage d'un dispositif à pédale de frein (18) muni d'un codeur de valeur de freinage (69) disposé dans la cabine (224 ; 242), le contrôleur (17 ; 99 ; 125 ; 141 ; 244) peut générer au moins un signal de commande de force de freinage destiné à commander, notamment pour augmenter, maintenir et réduire en fonction du signal de demande de freinage, la force de freinage d'au moins un frein du système de freinage (16 ; 96 ; 124 ; 136 ; 170 ; 178 ; 184 ; 190 ; 200 ; 210 ; 216).

10. Système de freinage comprenant un contrôleur (17 ; 99 ; 125 ; 141 ; 244) selon l'une des revendications précédentes.

11. Véhicule équipé d'un contrôleur (17 ; 99 ; 125 ; 141 ; 244) destiné à commander un système de freinage du véhicule (10 ; 92 ; 132 ; 238),
- le véhicule (10 ; 92 ; 132 ; 238) possédant une structure porteuse (222 ; 240) et une cabine (224 ; 242) portée par la structure porteuse (222 ; 240) et possédant au moins un siège de conducteur (226),
- le contrôleur (17 ; 99 ; 125 ; 141 ; 244) pouvant être disposé à l'extérieur de la cabine (224 ; 242) sur la structure porteuse (222 ; 240),
**caractérisé en ce que**
- des lignes d'ABS (40 ; 66), qui mènent du contrôleur (17 ; 99 ; 125 ; 141 ; 244) à des capteurs de vitesse de rotation de roue (38 ; 60), sont utilisées comme des antennes servant à capter des signaux de modules de contrôle de la pression des pneus, lesquels détectent la pression des pneus et sont montés sur ou dans des roues (20 ; 56) ou des valves de pneu du véhicule (10 ; 92 ; 132 ; 238), ou sont utilisés comme des lignes d'arrivée électriques vers des antennes installées dans des corps de roue du véhicule (10 ; 92 ; 132 ; 238) servant à recevoir des signaux des modules de contrôle de la pression des pneus.

12. Véhicule selon la revendication 11, **caractérisé en ce que** le contrôleur (17 ; 99 ; 125 ; 141 ; 244) est configuré selon l'une des revendications 2 à 9.
